# FASCICULE DE BREVET EUROPEEN

(11) **EP 0 489 668 B1**
(45) Date de publication et mention de la délivrance du brevet: **08.03.1995**
(21) Numéro de dépôt: 91420427.6
(22) Date de dépôt: 03.12.1991
(51) Int. Cl.: B60R 1/10

(54) **Dispositif permettant la visibilité vers l'avant sur des véhicules automobiles ou engins, du côté opposé au conducteur**
Vorrichtung um dem Fahrer eines Kraftfahrzeuges oder dergleichen den Vorwärtsblick auf die Beifahrerseite zu ermöglichen
Device giving the driver of a motor vehicle or the like a front view on passenger side

(30) Priorité: 05.12.1990 FR 9015455
(43) Date de publication de la demande: 10.06.1992
(73) Titulaire: Ponza, Robert, 74000 Annency (FR)
(72) Inventeur: Ponza, Robert, 74000 Annency (FR)
(74) Mandataire: Gasquet, Denis

(56) Documents cités:
- DE-A- 2 364 929
- DE-A- 2 364 929
- FR-A- 378 068
- GB-A- 477 576
- US-A- 1 518 956
- US-A- 2 374 956
- US-A- 4 394 065

## Description

La présente invention concerne un dispositif réflecteur permettant à tout conducteur d'engins ou de véhicules automobiles, de voir vers l'avant, la partie avant de la chaussée située du côté opposé au volant, qui peut être cachée par les véhicules ou obstacles circulant ou arrêtés devant le véhicule concerné.

Les dispositifs permettant aux conducteurs de voir vers l'arrière sont largement répandus et bien connus. Par contre, aucun dispositif permettant de voir vers l'avant n'est commercialisé. Toutefois, on connaît un tel dispositif qui est divulgué par la demande allemande du brevet DE-A-2364929 et qui décrit un dispositif selon le préambule de la revendication 1 permettant la visibilité vers l'avant qui comprend deux miroirs : un premier miroir dont la face réfléchissante est tournée vers l'avant renvoyant l'image formée sur un deuxième miroir tourné vers l'intérieur du véhicule et portant l'image reçue aux yeux du conducteur, le dispositif pouvant aussi être utilisé comme pare-soleil.. Mais si ce dispositif permet de voir par dessus un obstacle frontal, il ne permet pas de voir latéralement par rapport à celui-ci, ce qui présente un inconvénient majeur pour un conducteur dont le volant est disposé du côté droit du véhicule, comme en Angleterre, et qui conduit en France, sur le côté droit de la route, et inversement, le conducteur français dont le volant est à gauche et qui conduit en Angleterre, sur la gauche de la chaussée, n'ont qu'un champ visuel restreint du fait de l'inadaptation de leur véhicule respectif aux règles du Code de la Route, relatives au sens de la circulation dans les peays concernés. Ce problème s'accroît lorsque le conducteur de l'un de ces véhicules veut déboîter pour entamer une manoeuvre de dépassement du véhicule ou obstacle circulant ou arrêté devant lui, du fait du danger que représente la circulation venant en sens inverse, et qu'il ne voit pas correctement ou n'aperçoit que trop tard.

La présente invention a pour but d'apporter une solution acceptable à ce problème, en procurant au conducteur, quel que soit le côté où est placé le volant, une bonne visibilité de la partie avant de la chaussée, du côté opposé au conducteur.

Elle se caractérise par sa simplicité d'utilisation et de conception, ainsi que par son efficacité au niveau de la sécurité, tout en préservant le confort visuel des passagers. Elle est un compromis pratique, agréable et efficace entre les différents paramètres à prendre en compte, afin de préserver une utilisation normale du véhicule dont elle améliore la sécurité sans apporter de nouvelles nuisances.

La présente invention concerne un dispositif permettant la visibilité vers l'avant et qui s'appuie sur le principe universellement connu des effets de miroirs, depuis longtemps utilisés dans les salons de coiffure, les salles de bains, les dispositifs de surveillance des magasins, des mécanismes complexes, dans l'industrie électronique par exemple.

Ainsi le dispositif selon l'invention, comprend deux miroirs, un premier miroir dont la face réfléchissante est tournée vers l'avant renvoyant l'image ainsi formée sur un deuxième miroir intérieur tourné vers l'iarrière et portant l'image reçue aux yeux du conducteur, et qui est caractérisé en ce que ledit premier miroir est solidaire du pare-soleil qui est disposé du côté opposé audit conducteur. Ledit parasoleil étant mobile entre deux positions, une position relevée et une position abaissée, et ladite face réfléchissante du premier miroir étant disposée sur l'avant du réflecteur quand celui-ci est en position abaissée.

Selon l'une des dispositions, le premier miroir est un élément fixé au pare-soleil, et peut par exemple lui être fixé de façon fixe ou mobile permettant à la face réfléchissante d'être pivotée, coulissée ou basculée.

Selon une autre disposition, le premier miroir constitue à lui seul et en lui-même, le pare-soleil en se substituant à lui, et peut être par exemple constitué par une matière partiellement ou totalement transparente avec effet de miroir dans sa face avant quand le pare-soleil est dans sa partie abaissée.

Selon une autre caractéristique, le deuxième miroir est un rétroviseur intérieur, qui peut être un rétroviseur central disposé en haut ou en bas du pare-brise.

Selon une autre disposition, le rétroviseur est disposé en bas du pare-brise entre le centre du véhicule et l'extrémité opposée au conducteur.

Selon une autre variante de réalisation, le rétroviseur central comprend deux faces réfléchissantes distinctes, différemment orientées. L'une des faces réfléchissantes permettant la vision vers l'arrière, tandis que l'autre face réfléchissante est un des éléments du dispositif selon l'invention et permet donc la vision vers l'avant.

L'invention concerne aussi bien entendu un parasoleil constituant l'un des éléments du dispositif, le véhicule équipé du dispositif.

Ainsi le parasoleil selon l'invention est mobile entre deux positions, une position relevée et une position abaissée, et comprend sur sa face avant quand celui-ci est dans sa position abaissée, une face réfléchissante constituant un miroir tourné vers l'avant. L'invention concerne par ailleurs un véhicule équipé du dispositif.

D'autres caractéristiques et avantages de l'invention se dégageront de la description qui va suivre en regard des dessins annexés qui ne sont donnés qu'à titre d'exemples non limitatifs.

La figure 1 est une vue de dessus montrant un véhicule équipé du dispositif selon l'invention.

La figure 2 est une vue arrière partielle d'un véhicule équipé du dispositif selon l'invention, le dispositif étant dans sa position active de fonctionnement dans laquelle le pare-soleil est en position abaissée.

La figure 3 est une vue arrière partielle d'un véhicule équipé du dispositif selon l'invention, le dispositif étant dans sa position inactive de repos dans laquelle le pare-soleil est en position relevée. Le pare-soleil étant relevé à l'extrême pour laisser apparaître le miroir du dispositif.

Le dispositif selon l'invention est constitué d'un système de miroirs (6, 60, 8, 24, 25) indépendants, disposés à l'intérieur de l'habitacle (26).

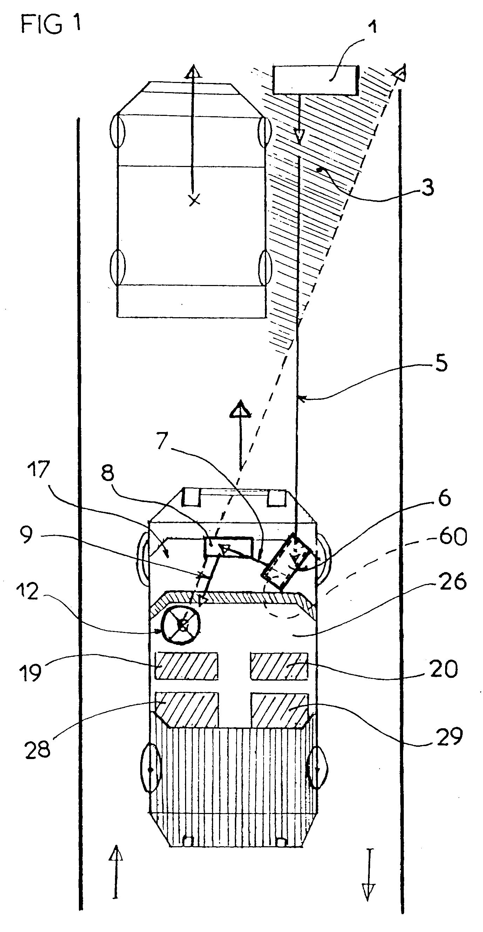

Selon l'invention, le système de miroirs comprend un premier miroir (60) solidaire du pare-soleil (6) disposé du côté opposé au conducteur (11). Ledit pare-soleil (6) étant, de façon connue en soi, mobile entre une position relevée inactive et une position active abaissée. Ledit premier miroir (60) étant fixé sur la face (61) du pare-soleil (6), tournée vers l'avant quand celui-ci est en position abaissée, tel que représenté aux figures 1, 2 et 3. Ledit système de miroirs comprend par ailleurs un deuxième miroir intérieur (8, 24, 25) disposé dans l'habitacle (26) et dont la face réfléchissante est tournée vers l'arrière. Les deux miroirs (8, 24, 25) et (60) étant bien entendu orientés de telle sorte que l'objet (1) destiné à être vu et se trouvant dans la partie de la chaussée cachée (3) et opposée au volant (12), soit reçu (5) par le premier miroir (60) pour former une première image qui est transmise (7) au second miroir (8, 24, 25) qui, lui-même retransmet une deuxième image ainsi formée, aux yeux du conducteur (11).

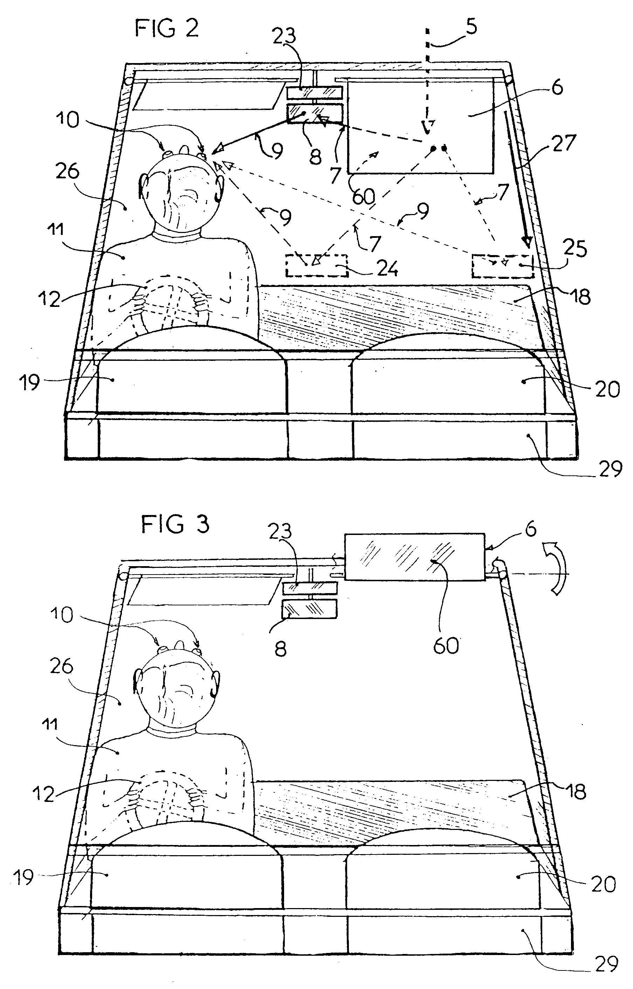

Selon l'un des modes de réalisation, le deuxième miroir (8) est un rétroviseur central intérieur (8) disposé à l'intérieur de l'habitacle (26) en haut du pare-brise (17), comme cela est représenté en trait continu à la figure 2. Ledit deuxième miroir constitué par un rétroviseur central intérieur (8) pouvant être conçu comme un double rétroviseur intérieur dont les deux miroirs (8, 23) sont verticalement superposés, pour permettre au conducteur (11) d'avoir à ses yeux (10) les deux images réfléchies, en regardant dans le sens de la marche. Ainsi, il verra d'une part ce qui se passe à l'arrière du véhicule grâce au rétroviseur (23), et d'autre part, ce qui se passe devant, et ce, grâce au deuxième miroir (8) notamment dans la zone normalement cachée.

Bien entendu, le deuxième miroir (8) ainsi que le rétroviseur (23) peuvent tout aussi bien être horizontalement placés côte à côte, dans une variante de réalisation. Notons aussi que le deuxième miroir (8) peut être lié au rétroviseur (23) tout en étant indépendamment orientable, car l'orientation du miroir (8) n'est bien entendu pas la même que celle du rétroviseur (23).

Par ailleurs, ledit deuxième miroir (8) peut être disposé en bas du pare-brise, soit au centre de l'habitacle (26) comme cela est représenté à la figure 1, en trait interrompu et référencé par la référence (24), soit latéralement du côté opposé au conducteur, comme cela est représenté à la figure 1 en trait interrompu et référencé par la référence (25).

Le premier miroir (60) lié au pare-soleil peut être indépendant ou lui être incorporé, joint ou accolé. Ainsi, le pare-soleil réflecteur (6) peut être spécialement conçu en substitution ou adjonction à l'original. Mais il peut aussi être aménagé à partir de l'original, auquel seraient intégrées, accolées ou adjointes, ou tout du moins reliées, au moins une surface réfléchissante (60) plane ou incurvée, ou bombée, ou présentant des angles de rupture de plans et d'orientations différents, sur la face tournée vers l'avant du pare-soleil (6), dans sa position abaissée.

Le pare-soleil réflecteur (6) dont la fonction est de réfléchir (7) l'image de la partie de la chaussée cachée (3) au conducteur (11), doit être de qualité suffisante pour assurer la sécurité recherchée. La matière composant cette surface réfléchissante est fonction des progrès techniques réalisés dans le domaine de l'optique et du traitement des surfaces réfléchissantes. Elle peut être constituée de tous les matériaux permettant cette fonction : verre plat ou bombé grossissant, ou incurvé, du type panoramique rétrécissant, ou en matière plastique ou de synthèse, recouverte, et présentant les caractéristiques d'un miroir.

Le pare-soleil réflecteur (6) peut s'ajouter ou se substituer au pare-soleil initial pour assurer à la fois la fonction de pare-soleil (6) et de réflecteur (60, 7).

Le pare-soleil réflecteur (6, 60) peut aussi être constitué d'une matière partiellement ou totalement transparente, avec effet de miroir selon le principe de la glace sans tain et de la glace argus, qui permettrait aux autres passagers, tels que les passagers avant (20) et arrière (28 et 29), de voir au travers de ce miroir (6) avec une moindre restriction de leur champ de vision au travers du pare-brise (17).

Le dispositif pare-soleil réflecteur (6), par sa taille et sa forme, qui peuvent recouvrir tout ou partie ou plus, que celles du pare-soleil d'origine (6), autorise l'utilisation d'un ou plusieurs miroirs dont la largeur et la longueur sont suffisantes pour assurer à la vue du conducteur (10), à partir de sa position normale de conduite, en continu et sans rupture, l'image rétrécie ou non de l'avant de la chaussée du côté opposé au volant, dans son état avant le déboîtement, pendant l'opération de déboîtement, et après le déboîtement, jusqu'à ce que le conducteur (11) puisse voir directement (10) au travers du pare-brise (17), la dernière image présentée à ses yeux (10) par le pare-soleil réflecteur.

Le pare-soleil réflecteur (6, 60) lié au pare-soleil d'origine (6) ou se substituant à lui, possède, quel que soit son mode de fixation, par rotules, glissières, cliquets, ventouses, au moins autant de possibilités d'orientation que son support (6), auxquelles s'ajoutent les siennes propres, c'est-à-dire la possibilité de pivoter et de basculer la surface réfléchissante indépendamment sur elle-même, ainsi que la possibilité de coulisser vers le bas selon (27) comme par exemple jusqu'au niveau du tableau de bord. Ainsi, le pare-soleil réflecteur (6, 60) peut être correctement orienté vers l'avant et vers le rétroviseur (6 ou 24 ou 25) selon un angle variable suivant différents paramètres pour renvoyer (7) l'image de la partie avant cachée de la route (3), sur le rétroviseur intérieur choisi (8, 24, 25) aménagé à cet effet, comme cela est plus particulièrement représenté aux figures 1 et 2.

Bien entendu, le second miroir du dispositif peut être le rétroviseur intérieur (8) ou (24) habituellement utilisé et placé au centre du pare-brise (17) vers le haut (8) ou vers le bas (24), quel que soit son support ou son mode de fixation, et peut servir de miroir récepteur aux reflets (7) produits par le pare-soleil réflecteur (6, 60).

Dans ce cas, le rétroviseur central intérieur (8) est aménagé de façon à remplir une double fonction :
- d'une part la fonction de rétroviseur arrière (23) au travers de la lunette arrière du véhicule, sur une de ses facettes (23),
- d'autre part, la fonction de second miroir (8). Dans ce cas, il recevra (7) l'image du pare-soleil réflecteur (6) et la transmettra (9) aux yeux (10) du conducteur (11). A cet effet, le rétroviseur central intérieur (8) doit posséder deux surfaces réfléchissantes distinctes (8 et 23) tournées vers l'intérieur du véhicule, mais différemment orientées, ou bien deux surfaces réfléchissantes (8 et 23) totalement indépendantes et orientables, y compris leur support respectif ou commun, quelle que soit sa nature, permettant à l'une d'entre elles (8) de glisser vers le centre bas du pare-brise (24) et le long de celui-ci jusqu'à l'angle bas du pare-brise, côté opposé au conducteur (25).

Le second miroir intérieur simple (8) ou double (8, 23) précédemment décrit peut, quel que soit son mode de fixation, être amovible, orientable, pivoter et basculer sur lui-même ou coulisser vers le bas du pare-brise jusqu'aux positions (24, 25) parallèlement au même mouvement (27) effectué sur le pare-soleil réflecteur (6).

Le second miroir intérieur (8, 24, 25) appartenant au dispositif selon l'invention peut aussi être installé vers le bas du pare-brise (24) et coulisser le long de celui-ci, du centre (24) vers l'extrémité la plus opposée au conducteur (25), quel que soit son support et son mode de fixation, qu'il soit fixé au pare-brise (17) ou sur le tableau de bord (18) ou sur une partie quelconque de la vitre de la portière avant ou sur la portière avant elle-même, du côté opposé à celui du conducteur.

Il va de soi que l'invention concerne aussi tout véhicule ou tout engin équipé du dispositif selon l'invention et quel que soit son type, son genre ou son utilisation.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif réflecteur à deux miroirs et pare-soleil pour un véhicule automobile ou engin permettant la visibilité vers l'avant comportant un premier miroir (6) solidaire du pare-soleil et dont la face réfléchissante est tournée vers l'avant renvoyant l'image formée sur un deuxième miroir (8, 24, 25) tourné vers l'intérieur du véhicule et portant l'image reçue aux yeux du conducteur, caractérisé en ce que le premier miroir (6) est solidaire du pare-soleil qui est disposé du côté opposé au volant du véhicule.

2. Dispositif permettant sur un véhicule automobile ou engin, la visibilité vers l'avant selon la revendication 1, caractérisé en ce que le pare-soleil est mobile entre deux positions, une position relevée et une position abaissée, ladite face réfléchissante du premier miroir étant disposée sur l'avant du réflecteur quand celui-ci est en position abaissée.

3. Dispositif permettant sur un véhicule automobile ou engin, la visibilité vers l'avant selon la revendication 2, caractérisé en ce que le premier miroir est un élément fixé au pare-soleil.

4. Dispositif permettant sur un véhicule automobile ou engin, la visibilité vers l'avant selon la revendication 3, caractérisé en ce que le premier miroir est fixé sur le réflecteur de façon mobile permettant à la face réfléchissante d'être pivotée, coulissée ou basculée.

5. Dispositif permettant sur un véhicule automobile ou engin, la visibilité vers l'avant selon l'une quelconque des revendications 3 ou 4, caractérisé en ce que le premier miroir constitue à lui seul le pare-soleil en se substituant à lui.

6. Dispositif permettant sur un véhicule automobile ou engin, la visibilité vers l'avant selon la revendication 5, caractérisé en ce que le pare-soleil est constitué par une matière partiellement ou totalement transparente avec effet de miroir dans sa face avant quand le pare-soleil est dans sa partie abaissée

7. Dispositif permettant sur un véhicule automobile ou engin, la visibilité vers l'avant selon l'une quelconque des revendications précédentes, caractérisé en ce que le deuxième miroir est un rétroviseur intérieur.

8. Dispositif permettant sur un véhicule automobile ou engin, la visibilité vers l'avant selon la revendication 7, caractérisé en ce que le rétroviseur central est disposé à l'intérieur du véhicule en haut ou en bas du pare-brise.

9. Dispositif permettant sur un véhicule automobile ou engin, la visibilité vers l'avant selon la revendication 8, caractérisé en ce que le rétroviseur central comprend deux faces réfléchissantes distinctes (8) et (23) différemment orientées.

10. Dispositif permettant sur un véhicule automobile ou engin, la visibilité vers l'avant selon la revendication 9, caractérisé en ce que les deux faces réfléchissantes (8) et (23) sont indépendantes et orientables.

11. Dispositif permettant sur un véhicule automobile ou engin, la visibilité vers l'avant selon l'une quelconque des revendications 9 et 10, caractérisé en ce que les deux faces réfléchissantes (8) et (23) sont disposées côte à côte ou l'une au-dessus de l'autre.

12. Dispositif permettant sur un véhicule automobile ou engin, la visibilité vers l'avant selon la revendication 7, caractérisé en ce que le rétroviseur est disposé en bas du pare-brise entre le centre du véhicule et l'extrémité opposée au conducteur.

13. Véhicule automobile ou engin équipé du dispositif et du pare-soleil selon l'une quelconque des revendications précédentes.

## Claims

1. Reflective device with two mirrors and sun visor for a motor vehicle or machine, affording forward visibility and including a first mirror (6) which is fixed to the sun visor and the reflective face of which is turned forwards reflecting back the image formed onto a second mirror (8, 24, 25) turned towards the inside of the vehicle and transmitting the image received to the eyes of the driver, characterised in that the first mirror (6) is fixed to the sun visor, which is disposed on the opposite side from the steering wheel of the vehicle.

2. Device affording, on a motor vehicle or machine, forward visibility according to Claim 1, characterised in that the sun visor can be moved between two positions, a raised position and a lowered position, the said reflective face of the first mirror being disposed on the front of the reflector when the latter is in the lowered position.

3. Device affording, on a motor vehicle or machine, forward visibility according to Claim 2, characterised in that the first mirror is a component fixed to the sun visor.

4. Device affording, on a motor vehicle or machine, forward visibility according to Claim 3, characterised in that the first mirror is fixed to the reflector so as to be movable, enabling the reflective face to be pivoted, slid or tilted.

5. Device affording, on a motor vehicle or machine, forward visibility according to either of Claims 3 and 4, characterised in that the first mirror by itself constitutes the sun visor, being substituted for it.

6. Device affording, on a motor vehicle or machine, forward visibility according to Claim 5, characterised in that the sun visor consists of partially or totally transparent material with a mirror effect in its front face when the sun visor is in its lowered part.

7. Device affording, on a motor vehicle or machine, forward visibility according to any one of the preceding claims, characterised in that the second mirror is an interior rear-view mirror.

8. Device affording, on a motor vehicle or machine, forward visibility according to Claim 7, characterised in that the central rear-view mirror is disposed inside the vehicle at the top or bottom of the windscreen.

9. Device affording, on a motor vehicle or machine, forward visibility according to Claim 8, characterised in that the central rear-view mirror comprises two separate reflective faces (8) and (23), which are differently oriented.

10. Device affording, on a motor vehicle or machine, forward visibility according to Claim 9, characterised in that the two reflective faces (8) and (23) are independent and can be oriented.

11. Device affording, on a motor vehicle or machine, forward visibility according to either one of Claims 9 and 10, characterised in that the two reflective faces (8) and (23) are disposed side by side or one above the other.

12. Device affording, on a motor vehicle or machine, forward visibility according to Claim 7, characterised in that the rear-view mirror is disposed at the bottom of the windscreen between the centre of the vehicle and the opposite end from the driver.

13. Motor vehicle or machine equipped with the device and sun visor according to any one of the preceding claims.

## Patentansprüche

1. Reflektorvorrichtung mit zwei Spiegeln und Sonnenblende zur Gewährung der Sicht nach vorn in Kraftfahrzeugen bzw. Maschinen, umfassend einen ersten, mit der Sonnenblende verbundenen Spiegel (6), dessen Spiegelseite nach vorn gerichtet ist und der das darin gespiegelte Bild über einen zweiten, zum Fahrzeuginneren gerichteten Spiegel (8, 24, 25) in das Sehfeld des Fahrers reflektiert, dadurch gekennzeichnet, daß der erste Spiegel (6) mit der Sonnenblende verbunden ist, die auf der dem Fahrzeuglenkrad entgegengesetzten Seite angebracht ist.

2. Vorrichtung für Kraftfahrzeuge bzw. Maschinen zur Gewährung der Sicht nach vorn nach Anspruch 1, dadurch gekennzeichnet, daß die Sonnenblende zwischen zwei Stellungen, und zwar zwischen einer hoch- und einer heruntergeklappten Stellung, beweglich ist, wobei die Spiegelseite des ersten Spiegels auf der Vorderseite des Reflektors angeordnet ist, wenn dieser heruntergeklappt ist.

3. Vorrichtung für Kraftfahrzeuge bzw. Maschinen zur Gewährung der Sicht nach vorn nach Anspruch 2, dadurch gekennzeichnet, daß der erste Spiegel ein an der Sonnenblende befestigtes Teil ist.

4. Vorrichtung für Kraftfahrzeuge bzw. Maschinen zur Gewährung der Sicht nach vorn nach Anspruch 3, dadurch gekennzeichnet, daß der erste Spiegel am Reflektor beweglich befestigt ist, so daß die Spiegelseite gedreht, verschoben und gekippt werden kann.

5. Vorrichtung für Kraftfahrzeuge bzw. Maschinen zur Gewährung der Sicht nach vorn nach Anspruch 3 oder Anspruch 4, dadurch gekennzeichnet, daß der erste Spiegel allein die Sonnenblende bildet, indem er diese ersetzt.

6. Vorrichtung für Kraftfahrzeuge bzw. Maschinen zur Gewährung der Sicht nach vorn nach Anspruch 5, dadurch gekennzeichnet, daß die Sonnenblende aus einem teilweise oder vollständig transparenten Material besteht, dessen Vorderseite einen Spiegeleffekt aufweist, wenn die Sonnenblende sich in heruntergeklappter Stellung befindet.

7. Vorrichtung für Kraftfahrzeuge bzw. Maschinen zur Gewährung der Sicht nach vorn nach einem der vorangegangenen Ansprüche, dadurch gekennzeichnet, daß der zweite Spiegel ein Innenrückspiegel ist.

8. Vorrichtung für Kraftfahrzeuge bzw. Maschinen zur Gewährung der Sicht nach vorn nach Anspruch 7, dadurch gekennzeichnet, daß der Mittelrückspiegel im Wageninneren oben oder unten an der Windschutzscheibe angebracht ist.

9. Vorrichtung für Kraftfahrzeuge bzw. Maschinen zur Gewährung der Sicht nach vorn nach Anspruch 8, dadurch gekennzeichnet, daß der Mittelrückspiegel zwei verschiedene reflektierende Flächen (8) und (23) umfaßt, welche unterschiedlich ausgerichtet sind.

10. Vorrichtung für Kraftfahrzeuge bzw. Maschinen zur Gewährung der Sicht nach vorn nach Anspruch 9, dadurch gekennzeichnet, daß die beiden reflektierenden Seiten (8) und (23) voneinander unabhängig und in ihrer Ausrichtung verstellbar sind.

11. Vorrichtung für Kraftfahrzeuge bzw. Maschinen zur Gewährung der Sicht nach vorn nach einem der Ansprüche 9 oder 10, dadurch gekennzeichnet, daß die beiden reflektierenden Seiten (8) und (23) nebeneinander oder übereinander angeordnet sind.

12. Vorrichtung für Kraftfahrzeuge bzw. Maschinen zur Gewährung der Sicht nach vorn nach Anspruch 7, dadurch gekennzeichnet, daß der Rückspiegel unterhalb der Windschutzscheibe zwischen der Wagenmitte und der dem Fahrer entgegengesetzten Seite angebracht ist.

13. Kraftfahrzeug bzw. Maschine, ausgestattet mit der Vorrichtung und der Sonnenblende nach einem der vorhergehenden Ansprüche.
